# EUROPÄISCHE PATENTSCHRIFT

(11) **EP 3 176 392 B1**
(45) Veröffentlichungstag und Bekanntmachung des Hinweises auf die Patenterteilung: **04.09.2019**
(21) Anmeldenummer: 16198834.0
(22) Anmeldetag: 15.11.2016
(51) Int. Cl.: F01L 1/047

(54) **VERSTELLBARE NOCKENWELLE**
ADJUSTABLE CAMSHAFT
ARBRE À CAMES RÉGLABLE

(30) Priorität: 02.12.2015 DE 102015224015
(43) Veröffentlichungstag der Anmeldung: 07.06.2017
(73) Patentinhaber: Mahle International GmbH, 70376 Stuttgart (DE)
(72) Erfinder: ROMMEL, Jürgen, 71576 Burgstetten (DE)
(74) Vertreter: BRP Renaud & Partner mbB Rechtsanwälte Patentanwälte Steuerberater

(56) Entgegenhaltungen:
- EP-A2- 0 254 058
- DE-A1-102009 041 873
- DE-A1-102011 086 236

## Beschreibung

Die vorliegende Erfindung betrifft eine verstellbare Nockenwelle mit einer Innenwelle und einer koaxial dazu angeordneten Außenwelle gemäß dem Oberbegriff des Anspruchs 1. Die Erfindung betrifft außerdem eine Brennkraftmaschine mit zumindest einer solchen Nockenwelle.

Aus der EP 0 254 058 A2 ist eine verstellbare Nockenwelle mit einer Innenwelle und einer koaxial dazu angeordneten Außenwelle bekannt, sowie mit einem Phasensteller, dessen Stator drehfest mit der Außenwelle verbunden und dessen Rotor mit der Innenwelle drehfest verbunden sind, wobei an einer Außenseite der Außenwelle eine erste Verbindungskontur vorgesehen ist, die mit einer komplementär dazu ausgebildeten zweiten Verbindungskontur am Stator formschlüssig zusammenwirkt und zumindest einen Toleranzausgleich in Axialrichtung ermöglicht.

Verstellbare Nockenwellen werden in modernen Brennkraftmaschinen bereits seit langem eingesetzt und dienen der Steuerung von Ventilöffnungszeiten. Durch ein Verdrehen einer Innenwelle relativ zu einer Außenwelle kann ein drehfest mit der Innenwelle verbundender erster Nocken relativ zu einem drehfest mit der Außenwelle verbundenen zweiten Nocken verdreht und damit die Ventilöffnungszeit bzw. die Ventilschließzeit verlängert oder verkürzt werden. Bewirkt wird die Relativverdrehung der Innenwelle zur Außenwelle üblicherweise über einen sogenannten Phasensteller, dessen Rotor drehfest mit der Innenwelle und dessen Stator drehfest mit der Außenwelle verbunden ist. Bei bisher aus dem Stand der Technik bekannten Nockenwellen erfolgte üblicherweise auch eine Axialfixierung der verstellbaren Nockenwelle, das heißt deren Innenwelle und deren Außenwelle über den Phasensteller, wobei die Innenwelle in Axialrichtung fest mit dem Rotor des Phasenstellers und die Außenwelle in Axialrichtung fest mit dem Stator des Phasenstellers verbunden waren. Der Stator bildet dabei das Gehäuse, in dem der Rotor läuft.

Da die Phasensteller hydraulisch betätigt werden, sollten die Spaltmaße zwischen Rotor und Stator vergleichsweise klein gehalten werden, um insbesondere unnötige Leckageverluste zu vermeiden. Durch Fertigungstoleranzen kann es jedoch nun bei sehr engen Toleranzen im Phasensteller vorkommen, dass bereits kleine Schrägstellungen oder Fertigungstoleranzen der Innenwelle zu einem Klemmen des Rotors relativ zum Stator führen.
Die vorliegende Erfindung beschäftigt sich daher mit dem Problem, für eine verstellbare Nockenwelle der gattungsgemäßen Art eine verbesserte oder zumindest eine alternative Ausführungsform anzugeben, die insbesondere einen zumindest geringen Toleranzausgleich auch bei einer Schrägstellung einer Nockenwelle relativ zu einem Phasensteller ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, zwischen einer Außenwelle einer verstellbaren Nockenwelle und einem zugehörigen Stator eines Phasenstellers eine axiale und/oder schräg Verstellmöglichkeit zu schaffen, welche einen Toleranzausgleich einer schräg zu einem Rotor des Phasenstellers stehenden Innenwelle durch ein Nachfolgen des Stators ermöglicht. Die erfindungsgemäße verstellbare Nockenwelle weist dabei in bekannter Weise eine Innenwelle sowie eine koaxial dazu angeordnete Außenwelle auf, ebenso wie einen Phasensteller, dessen Stator drehfest mit der Außenwelle und dessen Rotor drehfest mit der Innenwelle verbunden ist. An einer Außenweite der Außenwelle ist nun erfindungsgemäß eine erste Verbindungskontur vorgesehen, die mit einer komplementär dazu ausgebildeten zweiten Verbindungskontur am Stator formschlüssig zusammenwirkt und zumindest einen Toleranzausgleich in Axialrichtung zwischen dem Stator und der Außenwelle der verstellbaren Nockenwelle ermöglicht. Durch die erfindungsgemäß vorgesehene Verbindungskonturen sowohl an der Außenwelle als auch am Stator des Phasenstellers ist es somit möglich, dass der Stator des Phasenstellers und damit das Gehäuse des Phasenstellers Fertigungstoleranzen, bspw. zwischen Innenwelle und Rotor, auszugleichen vermag. Insbesondere kann es durch die erste und zweite Verbindungskontur ermöglicht werden, ein Verklemmen des Rotors relativ zum Stator des Phasenstellers zuverlässig zu unterbinden, wobei selbstverständlich die erste und zweite Verbindungskontur auch derart ausgebildet sein können, dass diese eine zumindest geringfügige Schrägstellung zwischen Stator und Außenwelle ermöglichen und dabei bspw. auch stärkere Schrägstellungen zwischen Rotor und Innenwelle auszugleichen vermögen.

Erfindungsgemäß ist an einer Außenseite der Innenwelle eine dritte Verbindungskontur vorgesehen, die mit einer komplementär dazu ausgebildeten, vierten Verbindungskontur am Rotor formschlüssig zusammenwirkt und ebenfalls zumindest einen Toleranzausgleich in Axialrichtung ermöglicht. Hierdurch ist auch der Ausgleich von Fertigungstoleranzen zwischen der Innenwelle und dem Rotor möglich, wodurch die gesamte erfindungsgemäße Nockenwelle nicht mehr mit dem bisher erforderlichen hohen Fertigungsgenauigkeiten hergestellt und damit teuer produziert werden muss.

Bei einer weiteren vorteilhaften Ausführungsform der erfindungsgemäßen Lösung ist die erste Verbindungskontur integral mit der Außenwelle ausgebildet. Eine derartige integrale Ausbildung der ersten Verbindungskontur mit der Außenkontur kann bspw. durch ein Fräsen der ersten Verbindungskontur in die Außenmantelfläche der Außenwelle erfolgen, wobei eine derartige erste Verbindungskontur selbstverständlich auch durch Stauchen der Außenwelle hergestellt werden kann. Die integral mit der Außenwelle hergestellte erste Verbindungskontur bietet dabei insbesondere auch den Vorteil, dass diese nicht nachträglich mit der Außenwelle montiert werden muss, wodurch Montagekosten vermieden werden können.

Alternativ hierzu ist auch denkbar, dass die erste Verbindungskontur an einer Hülse angeordnet ist, die auf der Außenwelle befestigt, insbesondere verschweißt, verklebt, verpresst, verlötet oder aufgeschrumpft ist. Hierdurch ist eine separate Herstellung bzw. Fertigung der erfindungsgemäßen ersten Verbindungskontur möglich, so dass die erfindungsgemäße Nockenwelle durch eine einfache Montage der Hülse mit der ersten Verbindungskontur auf der Außenwelle herstellbar ist.

Bei einer weiteren vorteilhaften Ausführungsform der erfindungsgemäßen Lösung sind die erste und die zweite Verbindungskontur derart ausgebildet, dass sie eine radiale Beweglichkeit und/oder ein Verkippen des Stators zur Außenwelle erlauben, wobei zusätzlich oder alternativ auch vorstellbar ist, dass die dritte und die vierte Verbindungskontur derart ausgebildet sind, dass sie eine radiale Beweglichkeit und/oder ein Verkippen des Rotors zur Innenwelle erlauben. Derartig ausgebildete Verbindungskonturen sind erfindungsgemäß ballig ausgebildet, wobei es bereits ausreichend ist, dass die erste oder die zweite Verbindungskontur ballig ausgebildet ist, die gegenüberliegende und formschlüssig damit zusammenwirkende zweite bzw. erste Verbindungskontur jedoch nicht ballig ausgebildet ist. Durch eine derartige ballige Ausbildung, welche ebenfalls fertigungstechnisch vergleichsweise einfach herstellbar ist, können neben Axialtoleranzen auch eine Schrägstellung des Stators relativ zur Außenwelle bzw. des Rotors relativ zur Innenwelle vergleichsweise einfach ausgeglichen werden, wodurch ein klemm- und reibungsfreier Betrieb des Phasenstellers und damit auch der Nockenwelle gewährleistet werden kann. Hierdurch lassen sich insbesondere Verschleiß und die damit verbundenen Wartungskosten reduzieren.

Bei einer weiteren vorteilhaften Ausführungsform der erfindungsgemäßen Lösung sind/ist die erste und die zweite Verbindungskontur und/oder die dritte und die vierte Verbindungskontur als Zahnkontur oder als Polygonalkontur ausgebildet. Bereits diese nicht abschließende Aufzählung lässt erahnen, welche mannigfaltige Möglichkeiten einer formschlüssigen Verbindungskontur gegeben sind, wobei die Verbindungskonturen lediglich eine spielfreie Drehmomentenübertragung gewährleisten müssen. Rein theoretisch ist es somit denkbar, dass die erste Verbindungskontur als Außensechskant oder Außenmehrkant und die zweite Verbindungskontur als Innensechskant bzw. Innenmehrkant ausgebildet ist. Auch hier kann durch eine ballige Ausbildung zumindest einer dieser Verbindungskonturen auch eine Schrägstellung zwischen der Außenwelle und dem Stator vergleichsweise einfach ausgeglichen werden, insbesondere sofern der Rotor schräg mit der Innenwelle verbunden ist und dies erfordert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung durch eine Nockenwelle mit einer integral mit einer Außenwelle der Nockenwelle ausgebildeten ersten Verbindungskontur,
- Fig. 2: eine Darstellung wie in Fig. 1, jedoch mit einer an einer Hülse ausgebildeten ersten Verbindungskontur,
- Fig. 3: eine Darstellung wie in Fig. 1, jedoch mit einer mit einem Rotor eines Phasenstellers verschraubten Innenwelle der Nockenwelle,
- Fig. 4: eine Darstellung wie in Fig. 3, jedoch mit einer ballig auf einer Hülse ausgebildeten ersten Verbindungskontur,
- Fig. 5: eine Darstellung wie in Fig. 2, jedoch mit erfindungsgemäß ballig ausgebildeter erster und dritter Verbindungskontur.

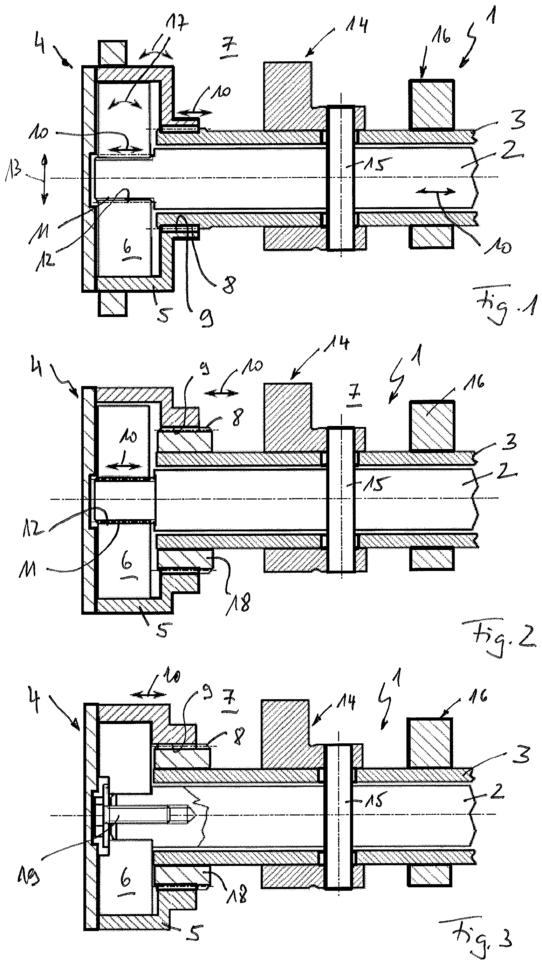

Entsprechend den Fig. 1 bis 5, weist eine Nockenwelle 1 eine Innenwelle 2 sowie eine koaxial dazu angeordnete Außenwelle 3 auf. Eine Verstellung der Innenwelle 2 relativ zur Außenwelle 3 erfolgt dabei mittels eines Phasenstellers 4, dessen Stator 5 drehfest mit der Außenwelle 3 und dessen Rotor 6 drehfest mit der Innenwelle 2 verbunden ist. Eingesetzt wird eine derartige Nockenwelle 1 üblicherweise in einer Brennkraftmaschine 7, bspw. in einem Kraftfahrzeug, um Ventilöffnungszeiten zu beeinflussen.

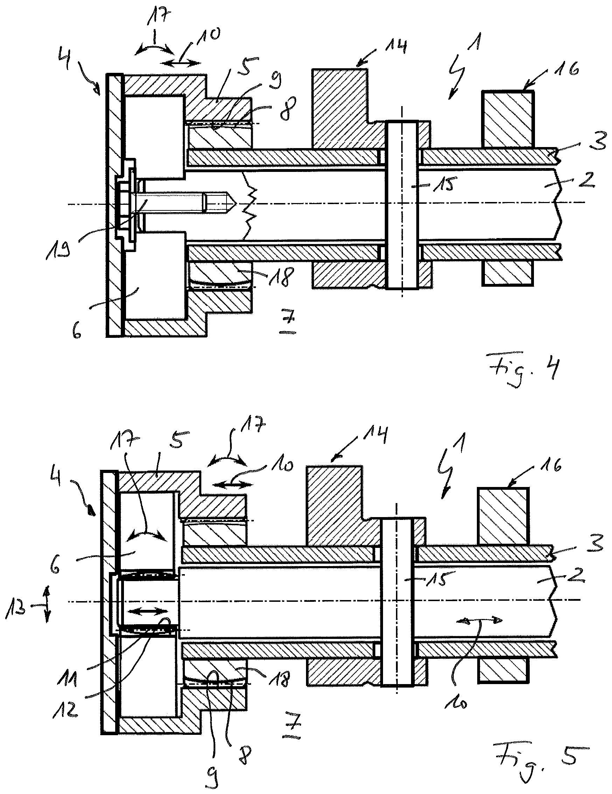

Bei bisher aus dem Stand der Technik bekannten Nockenwellen war die Innenwelle 2 fest mit dem Rotor 6 und die Außenwelle 3 fest mit dem Stator 5 des Phasenstellers 4 verbunden, wobei bereits eine kleine Schrägstellung des Rotors 6 relativ zur Innenwelle 2 zu einem Verklemmen des Rotors 6 relativ zum Stator 5 und damit zu einer Funktionsbeeinträchtigung führen konnte, da keinerlei Toleranzausgleich möglich war. Hier setzt die erfindungsgemäße Nockenwelle 1 an, die an einer Außenseite der Außenwelle 3 eine erste Verbindungskontur 8 aufweist, die mit einer komplementär dazu ausgebildeten zweiten Verbindungskontur 9 am Stator 5 formschlüssig zusammenwirkt und zumindest einen Toleranzausgleich in Axialrichtung 10 ermöglicht. Hierdurch ist es somit möglich, einen zumindest geringfügigen Toleranzausgleich zwischen dem Stator 5 und der Außenwelle 3 zu ermöglichen, der insbesondere auch bei einem fest mit der Innenwelle 2 verschraubten Rotor 6 (vgl. Fig. 3 und 4) eine ggf. vorhandene Schrägstellung des Rotors 6 relativ zum Stator 5 auszugleichen vermag.
Bei einer weiteren vorteilhaften Ausführungsform der erfindungsgemäßen Lösung ist an einer Außenseite der Innenwelle 2 eine dritte Verbindungskontur 11 vorgesehen, die mit einer komplementär dazu ausgebildeten vierten Verbindungskontur 12 am Rotor 6 formschlüssig zusammenwirkt und ebenfalls zumindest einen Toleranzausgleich in Axialrichtung ermöglicht. Eine derartige Ausführungsform ist bspw. in den Fig. 1, 2 und 5 dargestellt. Je nach Ausbildung der einzelnen Verbindungskonturen 8, 9, 10 und 12 ist dabei jedoch nicht nur ein Toleranzausgleich in Axialrichtung 10 möglich, sondern auch ein Toleranzausgleich in Radialrichtung 13 und/oder ein Ausgleich von Winkelabweichungen zwischen bspw. dem Stator 5 und der Außenwelle 3 bzw. dem Rotor 6 und der Innenwelle 2, das heißt ein Ausgleich bei einem Verkippen 17.
Um insbesondere ein Verkippen 17 zwischen bspw. dem Rotor 6 und der Innenwelle 2 bzw. dem Stator 5 und der Außenwelle 3 ausgleichen zu können, müssen die einzelnen miteinander zusammenwirkenden Verbindungskonturen 9 bzw. 11, 12 entweder eine gewisse radiale Höhe aufweisen oder aber zumindest eine dieser Verbindungskonturen 8, 9 oder 11, 12 sollte ballig ausgebildet sein, wie dies bspw. bei den Ausführungsformen der erfindungsgemäßen Nockenwelle 1 gemäß den Fig. 4 und 5 dargestellt ist.

Sämtliche Nockenwellen 1 besitzen dabei einen drehfest über einen Stift 15 der Innenwelle 2 drehfest verbundenen ersten Nocken 14 sowie einen drehfest mit der Außenwelle 3 verbundenen zweiten Nocken 16. Der zweite Nocken 16 kann dabei bspw. mittels eines thermischen Fügesitzes, mittels Verkleben, Verpressen, Verlöten oder Verschweißen mit der Außenwelle 3 verbunden sein.

Betrachtet man nun die einzelnen in den Fig. 1 bis 5 dargestellten Ausführungsformen der erfindungsgemäßen Nockenwelle 1, so kann man erkennen, dass gemäß der Fig. 1 an der Außenwelle 3 eine erste Verbindungskontur 8 und am zugehörigen Stator 5 eine zugehörige zweite Verbindungskontur 9 angeordnet sind. Die erste Verbindungskontur 8 ist dabei integral mit der Außenwelle 3 ausgebildet. In gleicher Weise ist an der Innenwelle 2 eine dritte Verbindungskontur 11 und am zugehörigen Rotor 6 eine komplementär dazu ausgebildete vierte Verbindungskontur 12 vorgesehen. Die Verbindungskonturen 8, 9, 11 und 12 sind dabei derart ausgebildet, dass diese sowohl einen Toleranzausgleich in Axialrichtung 10 als auch einen Toleranzausgleich bezüglich eines Verkippens 17 ermöglichen.

Betrachtet man die erfindungsgemäße Nockenwelle 1 gemäß der Fig. 2, so kann man dort eine erste Verbindungskontur 8 erkennen, die jedoch nicht integral mit der Außenwelle 3 ausgebildet ist, sondern an einer Hülse 18, wobei die dritte und vierte Verbindungskontur 11, 12 analog zur Fig. 1 ausgebildet sind. Auch bei diesen Verbindungskonturen 8, 9, 11, 12 ist zumindest ein Toleranzausgleich in Axialrichtung 10 möglich. Auch hier ist im Rahmen des axialen Spiels und des radialen Spiels ein Verkippen möglich.

Bei der gemäß der Fig. 3 dargestellten Nockenwelle ist der Rotor 6 über eine Schraube 19 fest mit der Innenwelle 2 verschraubt, ebenso wie gemäß der Fig. 4. Ein Toleranzausgleich zwischen der Außenwelle 3 und dem Stator 5 ist jedoch über die erste und zweite Verbindungskontur 8, 9 möglich, wobei die erste Verbindungskontur 8 wiederum auf einer Hülse 18 angeordnet ist.

Betrachtet man die Fig. 4 und 5, so kann man dort erkennen, dass gemäß der Fig. 4 die erste Verbindungskontur 8 gemäß der Fig. 5 die erste und dritte Verbindungskontur 8, 11 ballig ausgebildet sind und dadurch auch einen Toleranzausgleich gegenüber einem Verkippen 17 ermöglichen. Da die Innenwelle 2 gemäß der Fig. 4 über die Schraube 19 fest mit dem Rotor 6 gekoppelt ist, kann hier bspw. der Stator 5 einer Schrägstellung des Rotors 6 folgen.

Die Verbindungskonturen 8, 9, 11, 12 können dabei bspw. als Zahnkontur oder als Polygonalkontur, bspw. als Außen- und Innenmehrkant ausgebildet sein, bspw. als Außensechskant und Innensechskant. Wichtig ist hierbei lediglich, dass eine spielfreie Drehmomentenübertragung möglich ist, um eine genaue Steuerung der Ventilöffnungszeiten erzielen zu können.

Mit der erfindungsgemäßen Nockenwelle 1 ist es im Vergleich zu bisher aus dem Stand der Technik bekannten Nockenwellen erstmals möglich, Toleranzen sowohl in Axialrichtung 10 als ggf. auch in Radialrichtung 13 bzw. gegenüber einem Verkippen 17 ausgleichen und dadurch langfristig eine leichtgängige Verstellbarkeit der Nockenwelle 1, insbesondere durch Verhindern eines Verklemmens des Phasenstellers 4 gewährleisten zu können.

## Patentansprüche

1. Verstellbare Nockenwelle (1) mit einer Innenwelle (2) und einer koaxial dazu angeordneten Außenwelle (3), sowie mit einem Phasensteller (4), dessen Stator (5) drehfest mit der Außenwelle (3) verbunden und dessen Rotor (6) mit der Innenwelle (2) drehfest verbunden sind, wobei an einer Außenseite der Außenwelle (3) eine erste Verbindungskontur (8) vorgesehen ist, die mit einer komplementär dazu ausgebildeten zweiten Verbindungskontur (9) am Stator (5) formschlüssig zusammenwirkt und zumindest einen Toleranzausgleich in Axialrichtung (10) ermöglicht,
**dadurch gekennzeichnet,**
- **dass** an einer Außenseite der Innenwelle (2) eine dritte Verbindungskontur (11) vorgesehen ist, die mit einer komplementär dazu ausgebildeten vierten Verbindungskontur (12) am Rotor (6) formschlüssig zusammenwirkt und zumindest einen Toleranzausgleich in Axialrichtung (10) ermöglicht,
- **dass** zumindest eine Verbindungskontur (8, 9, 11, 12) ballig ausgebildet ist.

2. Nockenwelle nach Anspruch 1,
**dadurch gekennzeichnet,**
**dass** die erste Verbindungskontur (8) integral mit der Außenwelle (3) ausgebildet ist.

3. Nockenwelle nach Anspruch 1,
**dadurch gekennzeichnet,**
**dass** die erste Verbindungskontur (8) an einer Hülse (18) angeordnet ist, die auf der Außenwelle (3) befestigt, insbesondere verschweißt, verklebt, verpresst, verlötet oder aufgeschrumpft ist.

4. Nockenwelle nach einem der Ansprüche 1 bis 3,
**dadurch gekennzeichnet,**
- **dass** die erste und die zweite Verbindungskontur (8,9) derart ausgebildet sind, dass sie eine radiale Beweglichkeit (13) und/oder ein Verkippen (17) des Stators (5) zur Außenwelle (3) erlauben, und/oder
- **dass** die dritte und die vierte Verbindungskontur (11,12) derart ausgebildet sind, dass sie eine radiale Beweglichkeit (12) und/oder ein Verkippen (17) des Rotors (6) zur Innenwelle (2) erlauben.

5. Nockenwelle nach einem der Ansprüche 1 bis 4,
**dadurch gekennzeichnet,**
**dass** die erste und die zweite Verbindungskontur (8,9) und/oder die dritte und die vierte Verbindungskontur (11,12) als Zahnkontur oder als Polygonalkontur ausgebildet sind/ist.

6. Nockenwelle nach einem der Ansprüche 1 bis 5,
**dadurch gekennzeichnet,**
**dass** zumindest ein zweiter Nocken (16) durch einen thermischen Fügesitz, durch Schweißen, Löten, Kleben oder durch einen Presssitz auf der Außenwelle (3) fixiert ist.

7. Brennkraftmaschine (7) mit einer Nockenwelle (1) nach einem der Ansprüche 1 bis 6.

## Claims

1. Adjustable camshaft (1) with an inner shaft (2) and an outer shaft (3) arranged coaxially thereto, and with a phase shifter (4) the stator (5) of which is connected to the outer shaft (3) in a rotationally fixed manner and the rotor (6) of which is connected to the inner shaft (2) in a rotationally fixed manner, wherein on an outside of the outer shaft (3) a first connection contour (8) is provided, which interacts with a second connection contour (9) on the stator (5) formed complementarily thereto in a form-fit manner and enables at least a tolerance offset in an axial direction (10),
**characterised in that**,
- a third connection contour (11) is provided on an outside of the inner shaft (2), which interacts with a fourth connection contour (12) on the rotor (6) formed complementarily thereto in a form-fit manner and enables at least a tolerance offset in an axial direction (10),
- at least one connection contour (8, 9, 11, 12) has a crowned design.

2. Camshaft according to claim 1,
**characterised in that**,
the first connection contour (8) is formed integrally with the outer shaft (3).

3. Camshaft according to claim 1,
**characterised in that**,
the first connection contour (8) is arranged on a sleeve (18), which is fastened, in particular welded, glued, crimped, soldered or shrunk on the outer shaft (3).

4. Camshaft according to any one of claims 1 to 3,
**characterised in that**,
- the first and the second connection contour (8, 9) are formed in a such manner that they allow a radial movement (13) and/or a tilting (17) of the stator (5) to the outer shaft (3), and/or
- the third and the fourth connection contour (11, 12) are formed in such a manner that they allow a radial movement (12) and/or a tilting (17) of the rotor (6) to the inner shaft (2).

5. Camshaft according to any one of claims 1 to 4,
**characterised in that**,
the first and the second connection contour (8, 9) and/or the third and the fourth connection contour (11, 12) are configured as a tooth contour or as a polygonal contour.

6. Camshaft according to any one of claims 1 to 5,
**characterised in that**,
at least one second cam (16) is fixed on the outer shaft (3) by means of a thermal joining fit, by means of welding, soldering, gluing or crimping.

7. Combustion engine (7) with a camshaft (1) according to any one of claims 1 to 6.

## Revendications

1. Arbre à cames (1) ajustable avec un arbre intérieur (2) et un arbre extérieur (3) disposé de manière coaxiale par rapport à celui-ci, ainsi qu'avec un régulateur de phase (4), dont le stator (5) est relié de manière solidaire en rotation à l'arbre extérieur (3) et dont le rotor (6) est relié de manière solidaire en rotation à l'arbre intérieur (2), dans lequel est prévu, au niveau d'un côté extérieur de l'arbre extérieur (3), un premier contour de liaison (8) qui coopère par complémentarité de forme avec un deuxième contour de liaison (9) réalisé de manière complémentaire à celui-ci au niveau du stator (5) et permet au moins une compensation de tolérance dans la direction axiale (10),
**caractérisé en ce**
- **qu'**est prévu, au niveau d'un côté extérieur de l'arbre intérieur (2), un troisième contour de liaison (11) qui coopère par complémentarité de forme avec un quatrième contour de liaison (12) réalisé de manière complémentaire à celui-ci au niveau du rotor (6) et permet au moins une compensation de tolérance dans la direction axiale (10),
- **qu'**au moins un contour de liaison (8, 9, 11, 12) est réalisé de manière bombée.

2. Arbre à cames selon la revendication 1,
**caractérisé en ce**
**que** le premier contour de liaison (8) est réalisé d'un seul tenant avec l'arbre extérieur (3).

3. Arbre à cames selon la revendication 1,
**caractérisé en ce**
**que** le premier contour de liaison (8) est disposé au niveau d'une douille (18) qui est fixée, en particulier est soudée, collée, pressée, brasée ou emmanchée, sur l'arbre extérieur (3).

4. Arbre à cames selon l'une quelconque des revendications 1 à 3,
**caractérisé en ce**
- **que** le premier et le deuxième contour de liaison (8, 9) sont réalisés de telle manière qu'ils permettent une mobilité radiale (13) et/ou un basculement (17) du stator (5) par rapport à l'arbre extérieur (3), et/ou
- **que** le troisième et le quatrième contour de liaison (11, 12) sont réalisés de telle manière qu'ils permettent une mobilité radiale (12) et/ou un basculement (17) du rotor (6) par rapport à l'arbre intérieur (2).

5. Arbre à cames selon l'une quelconque des revendications 1 à 4,
**caractérisé en ce**
**que** le premier et le deuxième contour de liaison (8, 9) et/ou le troisième et le quatrième contour de liaison (11, 12) sont réalisés en tant que contour denté ou en tant que contour polygonal.

6. Arbre à cames selon l'une quelconque des revendications 1 à 5,
**caractérisé en ce**
**qu'**au moins une deuxième came (16) est fixée par un ajustement d'assemblage thermique, par soudage, brasage, collage ou par un ajustement serré sur l'arbre extérieur (3).

7. Moteur à combustion interne (7) avec un arbre à cames (1) selon l'une quelconque des revendications 1 à 6.
